# DEMANDE DE BREVET EUROPEEN

(11) **EP 1 087 577 A1**
(43) Date de publication de la demande: **28.03.2001**
(21) Numéro de dépôt: 99440174.3
(22) Date de dépôt: 02.07.1999
(51) Int. Cl.: H04L 12/56

(54) **Procédé d'allocation / partage de ressources entre plusieurs abonnés d'un réseau de communications**

(71) Demandeur: ALCATEL, 75008 Paris (FR)
(72) Inventeur: Lauro, Sylvain, FR-75013 Paris (FR); Plateau, Jean-Laurent, FR-92330 Sceaux (FR)
(74) Mandataire: El Manouni, Josiane

(57) **Abrégé**

On optimise, dans un réseau (201 à 204), l'utilisation d'une ressource (209) en gérant son accés de manière dynamique. Des utilisateurs n'accède à cette ressource que lorsqu'ils en ont besoin et il la libère tout de suite après. Cela est obtenu grace à une hiérarchisation, dans une mémoire (207) et sous forme de liste, des utilisateurs en fonction d'un contrat qu'ils ont souscrit pour avoir accés à la ressource. Les besoins d'accés à la ressource des utilisateurs sont examinés et servis (200) régulièrement.

## Description

La présente invention a pour objet un procédé d'allocation/partage de ressources entre plusieurs abonnés d'un réseau de communications. Le domaine d'application de l'invention est formé par l'ensemble des réseaux de communications du type point-multipoints dans lesquels on partage des ressources. Les ressources allouées sont principalement des ressources de transmission, par exemple des canaux définis par des dates, des fréquences et ou des noeuds physique de communication. De même l'invention peut être transposée dans le domaine des applications multitâches ou, multiprocesseurs et multitâches. En effet dans le cadre d'un environnement multitâches, un processeur est un point central dans lequel les différents processus sont effectués. Dans ce cas la ressource est une ressource de traitement. Le but de l'invention est de garantir aux abonnés un accès optimum à une ressource, sans que cette ressource soit gaspillée, et en assurant aux différents abonnés la quantité de ressource minimale pour laquelle ils ont souscrit un abonnement. Un autre but de l'invention est de fournir un service de transmissions performant sans avoir à surdimensionner des équipements de transmission.

Dans l'état de la technique des utilisateurs peuvent déjà s'abonner à un réseau de télécommunication. Il existe alors deux façons de gérer ces abonnements. Dans un premier cas on garantit une certaine quantité de ressource à ces abonnés lorsqu'ils sont connectés au réseau, par exemple une certaine bande passante. Lorsqu'un abonné se connecte, le réseau connaît la bande passante maximum et le nombre d'abonnés déjà connectés. Le réseau regarde si l'insertion de ce nouvel abonné dans le réseau peut se faire sans qu'il y ait dépassement de la bande passante. Si cela peut se faire, le nouvel abonné est connecté avec une bande passante donnée. Si cela n'est pas possible, la connexion est rejetée et l'abonnée n'a pas accès au réseau. Dans ce cas de figure, un abonné qui se connecte se voit allouer, jusqu'à sa déconnexion, une certaine partie de la bande passante, donc de la ressource. Cette ressource allouée ne peut plus être utilisée par personne d'autre que cet abonné, même ce abonné ne l'utilise pas alors qu'il est connecté. Cette situation est gênante, car bien qu'il existe de la ressource de transmission disponible, car non utilisée, il y peut y avoir des abonnés qui ne peuvent pas se connecter.

La deuxième solution qu'on trouve dans l'état de la technique consiste à autoriser tous les abonnés qui en font la demande à se connecter. La ressource est alors également partagée entre tous les abonnés connectés au même moment. Si un grand nombre d'abonnés se connectent, on assiste alors à un écroulement de la ressource. En effet, chaque abonné se voit allouer une fraction égale de la ressource. Au fur et à mesure que des nouveaux abonnés se connectent, cette fraction va en diminuant. Le problème du premier cas se repose ici. En effet, tous les abonnés connectés se voient allouer une partie de la ressource, dont ils ne se servent pas forcément. Les abonnés qui se servent de la ressource ne disposent quant à eux que de très peu de ressources. Dans le cas de transferts de données, les débits de transmission sont réduits. En effet, si on prend comme exemple de ressource un canal de transmission ayant un débit total de 10 kbits/s et que 100 abonnés soient connectés, alors chacun se voit allouer un débit de 100 bits/s. Il peut se produire le phénomène suivant, à savoir que 99 abonnés sur les 100 connectés n'ont rien à transmettre, alors qu'un abonné a 100 kbits à transmettre. La transmission va alors s'effectuer au rythme de 100 bits/s, alors que rien ne transite sur le reste du canal.

L'invention résout ces problèmes et permet de garantir un débit minimal aux abonnés. En effet l'invention permet d'offrir un droit d'accès contractuel et périodique à des ressources rendues disponibles. Dans l'invention l'abonné relâche dynamiquement la ressource dont il n'a éventuellement pas besoin. La ressource relâchée est alors restituée aux autres abonnés en communication. On établit donc une différence entre abonné connecté et abonné en communication. Pour être en communication, il faut que l'abonné se soit connecté et qu'il transmette des données. Mais un abonné connecté n'échange pas forcément des données. Lorsqu'il souhaite communiquer, l'abonné se voit allouer la quantité de ressources pour laquelle il a contracté. Cette allocation se fait suite à une requête de l'abonné qui indique en même temps combien de données il a à transmettre. Une fois ces données transmises, la ressource est relâchée.

Si tous les abonnés connectés souhaitent communiquer en même temps, cas très peu probable, le réseau ne pourra éventuellement pas satisfaire leur requête aux débits auquels ils ont souscrit. Mais ce problème ne dure qu'un court instant. En effet, au fur et à mesure que les communications se terminent, la ressource est libérée et réallouée aux abonnés restants en communication, ou aux abonnés connectés qui manifestent un nouveaux besoin de communication. Dans l'invention on a découvert que ce problème est rare car, s'il est courant qu'il y ait beaucoup d'abonnés connecté, il est moins fréquents que tous les abonnés connectés communiquent en même temps et à plein débit.

L'invention a donc pour objet un procédé d'allocation de ressources de transmission par un serveur de ressources dans un réseau de télécommunications entre plusieurs abonnés dans lequel :
- on initialise une durée de connexion d'un premier abonné au réseau pendant laquelle ce premier abonné est susceptible d'utiliser une ressource de transmission mise à sa disposition par le serveur de ressource du réseau afin de transmettre des données,
- pendant une première durée de communication, située temporellement au cours de cette durée de connexion, ce premier abonné utilise réellement la ressource de transmission mise à sa disposition par le serveur de ressource pour transmettre des données,
caractérisé en ce que
- le premier abonné transmet préalablement au serveur de ressource une information représentative d'un besoin quantifié de données à transmettre,
- le serveur de ressource alloue au premier abonné des durées de communication, pendant cette durée de connexion, en fonction du besoin transmis par ce premier abonné.

L'invention sera mieux comprise à la lecture de la description qui suit et à l'examen des figures qui l'accompagnent. Celles-ci ne sont présentées qu'à titre indicatif et nullement limitatif de l'invention. Les figures montrent :
- Figure 1 : une illustration des besoins de l'abonné en ressources au cours du temps ;
- Figure 2 : une illustration d'un dispositif premettant la mise en oeuvre de l'invention ;
- Figure 3 : une illustration de la hierarchie des abonnés en fonction de leur contrat ;
- Figure 4 : une illustration d'une table contenant des informations sur les abonnés ;
- Figure 5 : une illustration des étapes du procédé selon l'invention ;
- Figure 6 : une illustration de la mise en oeuvre du procédé selon l'invention.

Dans la description qui suit on considère pour simplifier que les ressources à allouées sont constituées par des canaux de transmission, existant dans un réseau, et ayant un débit maximum fixé. Les ressources peuvent néammoins comporter entre deux points du réseaux différents type de canaux, à différents débits. Les abonnés souscrivent un abonnement pour avoir accès à ce type de canaux de transmission et pouvoir transmettre des informations. Dans l'exemple décrit des abonnés peuvent accéder au canal de transmission selon deux services au choix. Un premier service garantit un débit minimum, un deuxième service permet d'avoir accès à la ressource suivant les disponibilités, et avec un débit garanti. Une personne peut donc s'abonner et souscrire un contrat selon le premier service et ou selon le deuxième service. L'abonnement signifie que lors d'une tentative de connexion au réseau, l'utilisateur s'il est abonné, sera reconnu par le réseau et accepté.

Selon une caractéristique essentielle de l'invention, après connexion d'un abonné, losque cet abonné veut transmettre des données, il émet une requête en indiquant la quantité de données qu'il veut transmettre. Par exemple cette indication est portée en entête du message de données que l'abonné transmet au réseau. En variante la requête est préalable à la transmission, celle-ci s'effectuant ensuite en synchronisme avec un ordre de transmisison émis par un serveur de transmission du réseau. En réponse à cette requête l'abonné se verra alloué un quantum de la ressource disponible correspondant à son contrat.

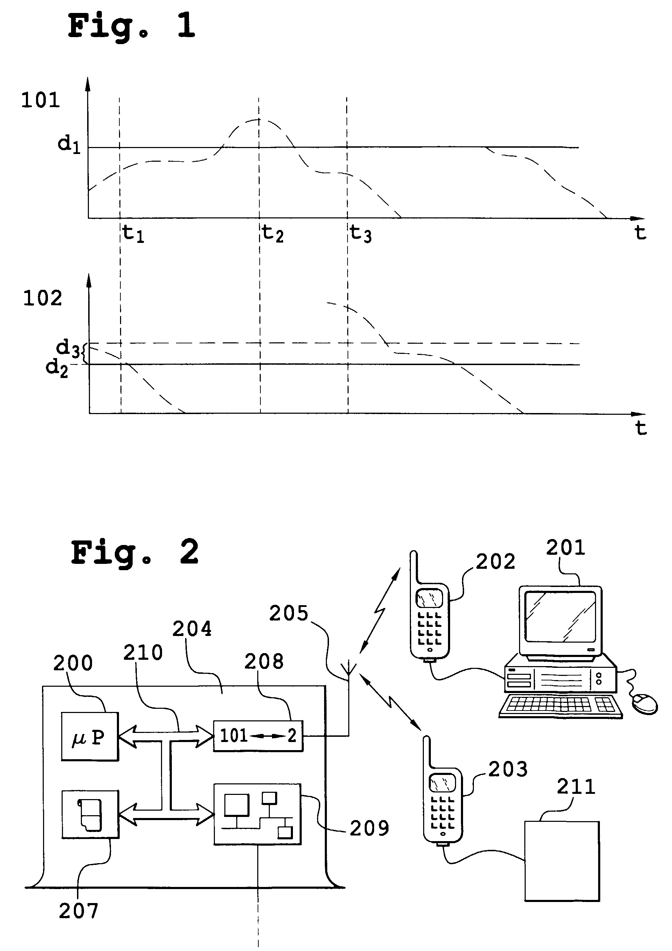

La figure 1 montre montre deux graphes ayant en abscisse le temps et en ordonnées le besoin en ressource. Un premier graphe 101 concerne un premier abonné, un deuxième graphe 102 concerne un deuxième abonné. Le premier abonné a souscrit à un abonnement qui lui donne le droit à un débit garanti d₁. Le deuxième abonné a souscrit à un abonnement qui lui donne le droit à un débit garanti d₂. Le deuxième abonné a aussi souscrit à un deuxième abonnement qui lui donne le droit à un supplemént de débit optionnel maximum d₃. A un instant t₁, le premier abonné a un besoin en ressource inférieur à d₁, il sera donc servi. Le deuxième abonné a un besoin en ressource supérieur à d₂ mais inférieur à d₂ + d₃. Il sera servi jusqu'à d₂ quoi qu'il arrive, et jusqu'à son besoin s'il reste suffisamment de ressources de transmission dans le réseau. A un instant t₂ le premier abonné à des besoins supérieurs à d₁ et le deuxième abonné n'a pas de besoin en ressource. Le premier abonné sera servi jusqu'à d₁. La différence entre ses besoins et d₁ sera reportée sur ses besoins futurs.

A cet effet on découpe le temps en cycles. Chaque cycle comporte un certain nombre de fenêtres temporelles. Les besoins et les droits d'un utilisateur sont exprimés en nombre de fenêtres par cycle. Selon l'invention les besoins des utilisateurs sont évalués et servis périodiquement. Si à un instant les besoins d'un utilisateur excèdent ses droits, ces besoins seront reportés et pris en compte au prochain examen de ses besoins.

En un temps t₃, le premier utilisateur a des besoins inférieurs à d₁, ils seront donc servis. Le deuxième utilisateur a des besoins supérieurs à d₂ + d₃, ces besoins seront donc servis jusqu'à d₂, jusqu'à d₂ + d₃ s'il y a suffisamment de ressources. Les besoins excédant d₂ + d₃ seront examinés ultérieurement.

La figure 2 montre un dispositif comportant les éléments nécessaires à la mise en oeuvre de l'invention. La figure 2 montre un ordinateur 201 de type ordinateur de bureau. L'ordinateur 201 est connecté à un téléphone 202 mobile par une ligne filaire de type liaison série. Un autre téléphone 203 mobile est connecté par une liaison filaire de type série par exemple à un autre appareil 211 pouvant échanger des données avec lui. Les téléphones 202 et 203 sont connectés à une station de base 204 via un aérien 205. Dans la pratique il s'agit ici d'établir une liaison radioélectrique entre l'ordinateur 201 et une borne 204. Il peut aussi s'agir d'un réseau où les téléphones 202 et 203 sont des terminaux et la borne 204 une passerelle vers une ligne à haut débit par exemple.

La borne 204 contient un microprocesseur 200, une mémoire 207, un circuit de modulation-démodulation 208, et un circuit 209 d'interfaçage avec un réseau ayant un débit donné. La mémoire 207 et la mémoire de l'ordinateur 201 contiennent les programmes nécessaires à la réalisation du procédé selon l'invention. La mémoire 207 contient aussi les informations sur les abonnés du réseau. Les éléments 200 et 207 à 209 sont connectés par un bus 210. La mémoire 207 peut être accédée en lecture et en écriture par le microprocesseur 200.

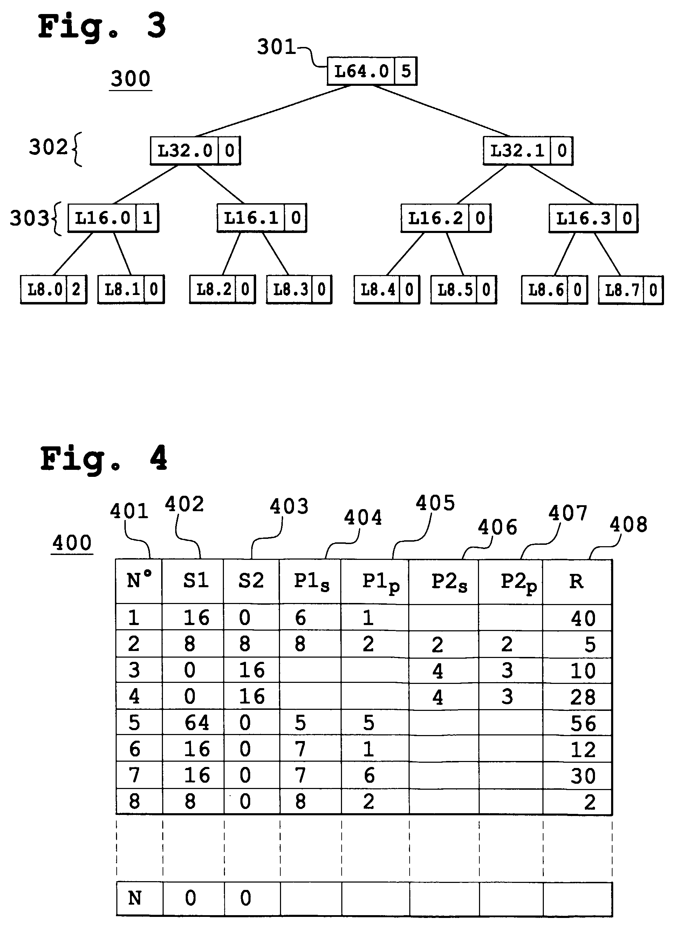

La figure 3 montre la hierarchisation des abonnés à un service. Ceux-ci sont regroupés dans des listes en fonction de leur contrat, puis ces listes sont chaînées dans une arbre binaire équilibré. Un arbre est contient une racine, des noeuds et des feuilles. La racine est le noeud de niveau le plus faible, les feuilles les noeuds de niveau le plus élevé c'est à dire la pronfondeur de l'arbre moins 1. Les autres noeuds constitue les niveaux intermédiare. Dans un arbre binaire équilibré chaque niveau à un nombre de noeuds égal à 2^niveau. Le fait de chaîner les liste dans un arbre signifie qu'a chaque noeud de l'arbre est associé une liste.

On définie alors des chemins dans cet arbre binaire, le parcours de ces chemins de manière séquentielle permet de satisfaire tous les abonnés. Dans un exemple préféré il existe quatre types de contrats. Un premier type de contrat garantit à l'abonné un accès au réseau avec un débit de 64 kbits ou plus, un deuxième type avec un accès garantit de 32 kbits/s, un troisième type avec un accès de 16kbits/s et un dernier type avec un accès de 8 kbits/s. On crée une liste pour les abonnés du premier type, deux listes pour les abonnés du deuxième type, quatre listes pour les abonnés du troisième type et huit listes pour les abonnés du dernier type. Soit L64.0 la liste des abonnés la liste des abonnés du premier type. Soit L32.0 et L32.1 les listes des abonnés du deuxième type. Soit L16.0 à L16.3 les listes des abonnés du troisième type et L8.0 à L8.7 les listes des abonnés du dernier type.

Une racine 301 de l'arbre 300 est constitué par la liste L64.0. Le premier niveau 302 de l'arbre 300 est constitué par les listes L32.0 et L32.1. Le deuxième niveau 303 de l'arbre 300 est constitué par les listes L16.0 à L16.3. En fin les feuilles de l'arbre sont les listes L8.0 à L8.7. A chaque liste de l'arbre 300 correspond une adresse dans la mémoire 207 de la borne 204 dans laquelle est stocké le numéro du premier abonné présent dans cette liste.

On définit dans l'arbre 300 huit chemins :

**Tableau 1**

| | |
|---|---|
| Chemin 0 | L64.0→L32.0→L16.0→L8.0 |
| Chemin 1 | L64.0→L32.1→L16.1→L8.1 |
| Chemin 2 | L64.0→L32.0→L16.2→L8.2 |
| Chemin 3 | L64.0→L32.1→L16.3→L8.3 |
| Chemin 4 | L64.0→L32.0→L16.0→L8.4 |
| Chemin 5 | L64.0→L32.1→L16.1→L8.5 |
| Chemin 6 | L64.0→L32.0→L16.2→L8.6 |
| Chemin 7 | L64.0→L32.1→L16.3→L8.7 |

Le parcours de tous ces chemins les uns après les autres constitue un anneau. Dans cet anneau la fréquence d'apparition des abonnés est proportionnelle à la valeur du contrat qu'ils ont souscrit. Ainsi un abonné ayant souscrit un contrat du premier type apparaîtra dans l'anneau huit fois plus qu'un abonné ayant souscrit un contrat de dernier type. Il sera donc servi huit fois plus souvent. Ce qui correspond bien à son contrat, en effet le contrat du dernier type correspond à 8 kbits/s et 8 x 8 font bien 64. On peut définir d'autre chemin, ce qui compte c"est la fréquence d'aparition des abonnés lorque l'on considère l'anneau formé par l'ensemble des chemins.

Dans des variantes, la structure de l'arbre 300 peut être aggrandi. En effet on peut envisager un troisième niveau, ce qui porterait le nombre de contrats possibes à 5. De même il est envisageable d'utiliser un arbre qui ne soit pas binaire mais ternaire ou quaternaire voire plus. Cependant il est connu qu'un arbre d'ordre supérieur à 2 peut toujours se ramener à un arbre d'ordre 2. Ainsi la structure choisi ainsi que la profondeur de l'arbre est un bon compromis entre le nombre de services offerts et le temps nécessaire à la mise en oeuvre correcte de ces services.

Dans la pratique ces huit chemins sont stockés dans la mémoire 207 que se soit sous forme d'un tableau ou d'un morceau de programme, et la notion d'arbre a servi à les définir. Dans un exemple cette arborescence peut être stockée sous la forme du tableau 1 qui comporte 32 cases. Chaque case correspond à une liste. Une liste est stocké dans ce tableau par le numéro du premier abonné qui en fait parti.

La figure 4 illustre un exemple de stockage de la structure décrite à la figure 3. Il s'agit d'une table 400 stockée dans la mémoire 207 de la borne 204. Cette table contient des lignes, chacune de ces lignes correspond à un abonné. Chaque ligne contient plusieurs champs. Un premier champ 401 correspond au numéro de l'abonné. Un deuxième champ 42 contient des informations relatives au contrat qu'il a souscrit selon le premier service lui garantissant un débit minimum. Un troisième champ 403 contient des informations sur le contrat qu'il a éventuellemnt souscrit selon le deuxième service lui proposant un débit optionnel. Des champs 404 à 407 permettent de chaîner l'abonné dans les différentes listes qui ont été décrites précédemment. Enfin un champ 408 contient les besoins instantannés de l'abonné en ressource.

Les champs 404 et 405 sont relatifs au premier service. Pour un abonné X le champ 404 contient le numéro de l'abonné suivant l'abonné X dans la liste dans laquelle se trouve l'abonné X. Le champ 405 contient l'abonné précédent l'abonné X dans la liste dans laquelle il se trouve. Si le champ 404 est égal au numéro de l'abonné X, cela signifie que l'abonné X est le dernier abonné de la liste. Si le champ 405 est égal au numéro de l'abonné X, cela signifie que l'abonné X est le premier abonné de la liste. Les champs 406 et 407 sont identiques aux champs 404 et 405 mais pour le deuxième service. La figure 4 illustre le fait qu'un abonné numéro 1 a souscrit un contrat lui assurant un débit de 16 kbits/s. Les abonnés numéro 6 et 7 ont le même type de contrat. Il n'y a pas dautre abonné sur la table, qui ont le même type de contrat. Le champ 404 de l'abonné 1 a donc la valeur 6. Le champ 404 de l'abonné 6 à la valeur 7 est le champ 404 de l'abonné 7 à la valeur 7, ce qui signifie que l'abonné 7 est le dernier abonné de la liste. De même le champ 405 de l'abonné 1, le champ 405 de l'abonné 6 à la valeur 1 et le champ 405 de l'abonné 7 à la valeur 6. La table de la figure 4 est cité à titre d'exemple. Dans la pratique on essaye d'harmoniser la longueur des chemins, donc d'équilibrer la longueur des listes. Cela permet de distribuer dans le temps l'allocation de la ressource.

Cette structure de table cumule de nombreux avantages. Elle permet dans un premier temps de gérer simplement les listes utiles pour les besoins de l'invention. Il suffit en effet de gérer autant de champs du type 404 et 405 qu'il y a de listes d'abonnés. D'autre part l'accès aux informations de la table 400 et realtives à un abonné peut se faire de manière directe, par un simple calcul d'adresse. On connaît en effet la taille d'une ligne, et le numéro de l'abonné. On accède aux informations concernant l'abonné en multipliant la taille d'une ligne par le numéro de l'abonné et en ajoutant le résultat à l'adresse de base de la table 400 dans la mémoire 307. La structure de liste chaînée permet une insertion et une suppression des abonnés dans les différentes listes de manière rapide, il suffit de mettre à jour les champs concernés. Enfin avec la structure choisie il est possible de parcourir les listes dans les deux sens. Cela implique un gain de rapidité, notamment lorsqu'il faut rechercher un abonné en précédant un autre. Dans la pratique, une structure de ce type concernant 2000 abonnés nécessite moins de 64 kilo-octets.

Dans la pratique cette table 400 est, au moins pour partie, contenue dans une mémoire double port. En effet la table 400 est mise à jour lorsqu'un abonné exprime un besoin et lue en permanence afin de servir les besoins des abonnés. La mémoire double port permet à ces deux tâches de coopérer de manière asynchrone, chaque tâche utilisant un port pour accéder aux données contenues dans la table 400.

Dans la pratique il existe au moins une autre liste, celle des abonnés connectés mais dont les besoins courants sont nuls c'est la liste des abonnés en maintien de communication.

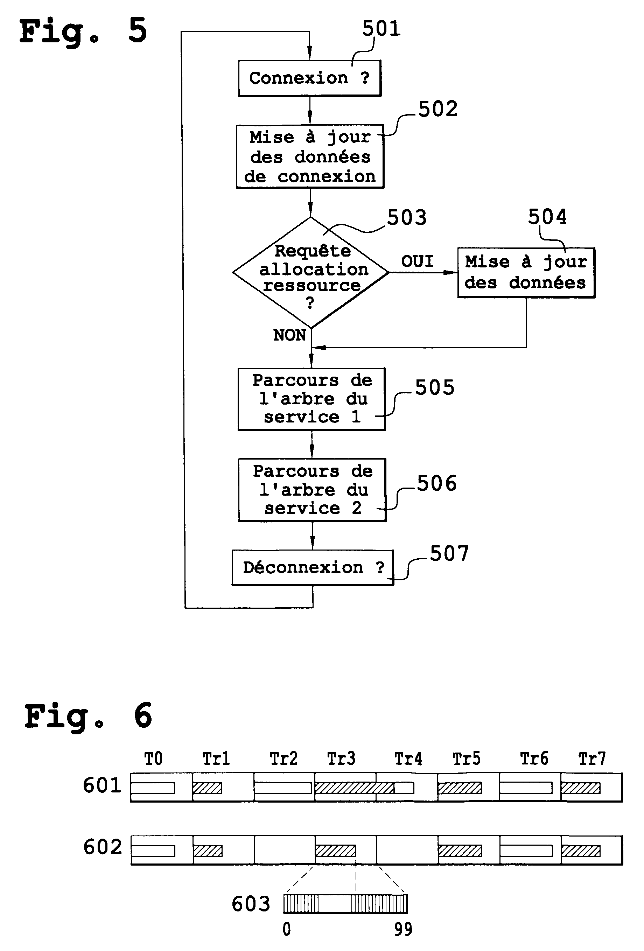

La figure 5 montre une étape préliminaire 501 de connexion. Dans cette étape, l'abonné annonce qu'il souhaite éventuellement utiliser des ressources. On passe alors à une étape 502 de mise à jour des données de connexion. Dans l'étape 502 le microprocesseur 200 va, sous le contrôle d'un programme contenu dans la mémoire 207, mettre à jour les champs adéquats dans la table des abonnés. Le microproceseur peut aussi décider de refuser la connexion, s'il constate que les risques de congestion au niveau de la ressource sont trop importants. Ce risque se mesure en additionnant les contrats du premier service. En effet ceux-ci correspondent à un débit garanti. Si le débit garanti dépasse de trop le débit disponible, il devient judicieux de refuser des nouvelles connexions garantissant elles aussi un débit.

Dans un premier temps l'abonné nouvellement connecté va se retrouver dans une liste des abonnés en maintien de communication. C'est-à-dire que l'abonné est connecté mais il n'a pas encore exprimé ses besoins ou il n'a pas de besoins. Dans une variante on envisage que l'abonné exprime un besoin dès sa connexion. Dans ce cas l'abonné est directement inséré dans une liste adéquate en fonction de son ou ses abonnements. On passe à une étape 503 de requête d'allocation de ressources. Dans cette étape le microprocesseur va recevoir et traiter les requêtes des abonnés connectés. Ces requêtes arrivent soit par un canal de signalisation, soit par la méthode dite du "piggybacking". Cette méthode consiste à insérer dans les trames de données des informations de signalisation. On économise ainsi de la ressource car la signalisation n'est pas constante.

Dans un exemple préféré on utilise un canal de signalisation à bas débit. Dans ce canal de signalisation à chaque abonné, qu'il soit connecté ou non, est attribué une fenêtre temporelle toutes les 500 millisecondes. Ce canal de signalisation bas débit est utilisé pa l'abonné lorsqu'il se connecte pour initier le dialogue avec le serveur, et exprimer ses prepiers besoins. Par la suite le débit du canal de signalisation est augmenté par la méthode du "piggybacking". Cette augmentation du débit de signalisation permet une réactivité plus importante du serveur par rapport aux besoins de l'abonné qui peuvent être exprimé plus souvent. Il y a un lissage du flux de donnés de l'abonné vers le serveur. Pour conserver cet avantage, on alloue une fenêtre temporelle à un abonné connecté même lorque celui ci n'a pas exprimé de besoin. On conserve ainsi une réactivité importante face à une demande évetuelle.

Dans un exemple un abonné numéro 2 a besoin de cinq fenêtres temporelles pour émettre des données. Le microprocesseur va donc mettre à jour le champ 408 de la ligne correspondant à l'abonné numéro 2. Il va incrémenter ce champ le chiffre 5. C'est l'étape 504 de mise à jour des données. Qu'il y ait eu ou pas de requête d'allocation, on passe régulièrement dans une étape 505 de parcours de l'arbre du service 1. Dans une variante, l'abonnée exprime ses besoins à chaque fois qu'il émet des données. Dans ce cas, le champ 408 n'est pas incrémenter d'un nouveau besoin mais mis à jour par les besoins exprimés.

Lorsqu'un abonné exprime un besoin, il est inséré dans les listes correspondant à ses contrats. C'est-à-dire, toujours dans le cas de l'abonné numéro 2, il sera inséré dans une liste correspondant au service 1 et à un contrat garanti de 8 kbits/s. Mais il sera aussi inscrit dans une liste correspondant au deuxième service et lui garantissant un débit optionnel de 8kbits/s. L'insertion dans une liste se fait soit par la gestion d'un pointeur d'insertion, soit un parcours de l'arbre afin de trouver la meilleure position où insérer l'abonné. Le pointeur d'insertion est mis à jour à chaque nouvelle insertion, il s'agit donc de la méthode la plus rapide, mais elle est un plus gourmande en place mémoire. Le but de l'opération étant que chaque chemin ait sensiblement la même longueur en nombre d'abonnés. L'insertion d'un élément dans une liste chaînée se fait de manière connue.

L'étape 505 commence toujours par l'exploration de la liste L64.0. On commence en effet à servir ceux qui ont le plus gros contrat. Dans l'exemple choisi, représenté sur la figure 4, la liste L64.0 contient un seul abonné qui est le numéro 5. Cet abonné a besoin de 56 fenêtres temporelles. On considère, pour les besoins de l'explication, qu'une trame contient 100 fenêtres temporelles. Un cycle contient huit trames. On considère aussi qu'un contrat du premier type donne le droit à 8 fenêtres temporelles par cycle, un contrat du deuxième type à quatre fenêtres temporelles par cycle, un contrat du troisième type à deux fenêtres temporelles par cycle et enfin un contrat du dernier type à une fenêtre temporelle par cycle. Dans le cas de l'utilisation d'un codage CDMA, le nombre de fenêtre par cycle est géré en même temps qu'un nombre de code par cycle.

L'abonné 5 va donc se voir attribuer une fenêtre temporelle dans la première trame. Selon le chemin 0 on passe alors à la liste L32.0. Celle-ci est vide on passe donc à la liste L16.0 qui commence à l'abonné numéro 1. L'abonné numéro 1 se voit donc attribuer une fenêtre temporelle dans la trame, puis on passe à l'abonné 6 et 7 qui se voient eux aussi attribuer une fenêtre temporelle chacun dans la trame. On passe alors à la liste L8.0 qui comence à l'abonné numéro 2. Les abonnés 2 et 8 se voient eux aussi attribuer une fenêtre temporelle chacun dans la trame. Le parcours de l'arbre correspondant au sevice 1 s'arrête soit à la fin d'un chemin, soit lorsqu'il y a dépassement de la capacité d'une trame. On est ainsi sûr de servir les abonnés selon leur contrat garanti, ou de gérer pour le mieux les congestions.

Lors du prochain passage par l'étape 505, le parcours de l'arbre 300 se fera suivant le chemin 1, puis lors du parcours suivant l'ordre du chemin 2 ainsi de suite jusqu'au chemin 7. On recommencera alors le cycle, avec le chemin 0.

L'étape 505 est suivie d'une étape 506 de parcours de l'arbre du service 2. Cet arbre n'est pas représenté mais il est similaire à l'arbre correspondant au service 1. Son parcours est cependant légèrement différent. En effet les abonnés qui sont présents dans l'arbre du service 2 ne sont servis que s'il reste des fenêtres temporelles disponibles dans la trame. On sert donc les abonnés présent dans l'arbre tant qu'il y a des fenêtres temporelles de libres dans la trame. Bien sûr si on constate qu'il n'y a aucun besoin exprimé dans l'arbre du service 2, on interrompt le parcours.

Que ce soit dans l'arbre du service 1 ou dans l'arbre du service 2, au fur et à mesure que les besoins des abonnés sont servis, les champs 408 correspondant à ces abonnés sont mis à jour.

On passe alors à une étape 507 de déconnexion. Dans cette étape le microprocesseur 200 étudie les demandes de déconnexion. Un abonné qui souhaite se déconnecter sera retiré de toutes les listes dans lesquels il était présent. On retire cet abonné des listes en mettant à jour les pointeurs 404 à 407. Par exemple pour déconnecter l'abonné numéro 6 de la figure 4, on efface la valeur des champs 404 et 405 correspondant à l'abonné numéro 6, après avoir mis à jour le champ 404 de l'abonné 1 c'est-à-dire lui avoir affecté la valeur 7 et après avoir mis à jour le champ 405 de l'abonné 7 c'est-à-dire lui avoir affecté la valeur 1. La suppression revient donc à affecter la valeur du champ 404 de l'abonné que l'on supprime au champ 404 de l'abonné qui le précède, et à affecter la valeur du champ 405 de l'abonné que l'on supprime au champ 405 de l'abonné qui le suit. Il faut bien sûr détecter le cas où il s'agit d'un premier ou d'un dernier de liste qui se déconnecte. Pour cela il suffit de tester les valeurs 404 et 405 et de les comparer au numéro de l'abonné. Si le champ 405 est égal au numéro de l'abonné, cela signifie que l'abonné est le premier de la liste. Pour déconnecter il suffit alors d'affecter au champ 405 du deuxième abonné de la liste la valeur du deuxième abonné de la liste. Si c'est le dernier abonné de la liste qui se déconnecte, il suffit d'affecter au champ 404 de l'avant-dernier abonné de la liste, le numéro de l'avant-dernier abonné de la liste. Bien sûr si l'abonné était le seul dans la liste, il suffit d'effacer les champs 404 et 405. Dans les trois derniers cas qui ont été cités, il ne faut pas oublier de mettre à jour les zones de mémoire contenant les numéros des premiers de liste.

Une fois qu'une trame est constituée, c'est-à-dire dans un exemple toutes les 5 ms, elle est transmise par le microprocesseur 200 au circuit 209 qui l'envoie alors sur le réseau. Le microprocesseur 200 va se servir du circuit 208 et de l'aérien 205 pour émettre les messages radioélectriques, par exempl, qui ont signifié à l'ordinateur 201, via le téléphone 202 le nombre de fenêtres temporelles dont il dispose dans la prochaine trames qui va partir. Fort de ce renseignement l'ordinateur 201 va pouvoir transmettre les informations correspondant au nombre de fenêtres temporelles qui lui ont été allouées. Ces informations seront émises via le téléphone 202, reçues par l'aérien 205 démodulées par le circuit 208 et mises dans les trames par le microprocesseur 200.

La figure 6 montre un premier cycle 601 et un deuxième cycle 602. La troisième trame du cycle 602 est décomposée. Une trame 603 montre qu'elle est composée de 100 fenêtres temporelles, par exemple, numérotées de 0 à 99. Au cours du cycles 601, les trames 0, 1, 2 ont suffit à servir les besoins des abonnés sans qu'il y ait de congestions. Au cours de la trame 3, les besoins correspondant à des débits garantis ont dépassé la capacité de la trame, c'est ce qu'on appelle une congestion, c'est-à-dire le réseau ne parvient plus à satisfaire les besoins des abonnés. Le parcours de l'arbre correspondant au service 1 s'est donc interrompu dans le chemin courant, au moment où la capacité de la trame a été atteinte, c'est-à-dire 100 fenêtres temporelles. Dans la trame 4, correspondant théoriquement au parcours de chemin suivant, on a repris le parcours là où il avait été interrompu dans le chemin correspondant à la trame 3. Puis on a parcouru le chemin correspondant à la trame 4.

Le cycle 602 illustre un cas de figure où il y a très peu d'encombrement dans les cycles, certaines trames sont même vides.

Dans la pratique on mesure un taux de congestion qui correspond à un nombre de trames consécutives pour lesquelles on n'a pas pu satisfaire les besoins des abonnés présent dans les chemins correpondant à ces trames. Si ce taux devient trop élevé, et si une il reste de la place dans une trame, on peut décider de parcourir plus d'un chemin pour remplir cet trame. Cela aura pour effet de faire diminuer le taux de congestion.

La méthode de gestion des congestions permet de continuer à servir les abonnés proportionnellement au contrat qu'ils ont souscrit, même si celui-ci n'est pas tout à fait atteint. Ce traitement est satisfaisant, car il est basé sur une hypothèse que les congestions ne sont pas fréquentes, donc d'une part les abonnés ne seront pas trop lésés et que d'autre part ils ne se rendront pas compte qu'ils sont lésés.

Dans la pratique le procédé décrit est câblé, c'est-à-dire réalisé sous la forme d'un circuit électronique. Il faut en effet répondre aux besoins de 2000 abonnés , avec un examen de ces besoins toutes les 5 ms. Lorsque des microprocesseurs suffisamment puissants apparaîtront, ou pour des applications ayant des contraintes temporelles moins importantes on peut utiliser une version purement logicielle du procédé.

La description précédente ne fait état que de deux types de service, néammoins dans la pratique il peut très bien n'y en avoir qu'un comme il peut y en avoir plus de deux.

## Revendications

1. Procédé d'allocation de ressources (209) de transmission par un serveur (204) de ressources dans un réseau (202-204) de télécommunications entre plusieurs abonnés (202, 203) dans lequel :
- on initialise une durée de connexion d'un abonné au réseau pendant laquelle ce premier abonné est susceptible d'utiliser une ressource de transmission mise à sa disposition par le serveur de ressource du réseau afin de transmettre des données,
- pendant une première durée de communication, située temporellement au cours de cette durée de connexion, cet abonné utilise réellement la ressource de transmission mise à sa disposition par le serveur de ressource pour transmettre des données,
caractérisé en ce que
- l'abonné transmet préalablement au serveur de ressource une information représentative d'un besoin quantifié de données à transmettre,
- le serveur de ressource alloue à l'abonné des quanta de ressource de communication, par exemple une durée de communication, pendant cette durée de connexion, en fonction du besoin transmis par cet abonné.

2. Procédé selon la revendication 1, caractérisé en ce que
- pour transmettre préalablement, les données à transmettre comportent un entête représentatif du besoin quantifié.

3. Procédé selon l'une des revendications 1 ou 2, caractérisé en ce que
- on classe des abonnés connectés dans des classes représentatives de contrat et ou de services auxquels ils ont souscrit,
- et on alloue une ressource de transmission à chaque abonné en communication en fonction de la classe de son contrat et ou de son service, et ou de ses besoins.

4. Procédé selon la revendication 3, caractérisé en ce que
- on organise les classes dans un cycle de parcours, la fréquence d'apparition de chaque classe dans ce cycle suit une progression géométrique.

5. Procédé selon l'une des revendications 3 ou 4, caractérisé en ce que
- pour classer, on crée une table (400) comportant, pour chaque abonné,
- un champ (401) de référence relatif à une identité de l'abonné,
- un champ (405) de désignation d'un abonné devant être servi avant cet abonné,
- et un champ (404) de désignation d'un abonné devant être servi après cet abonné, et
- on alloue des ressources de transmission disponibles au fur et à mesure aux différents abonnés en fonction d'un ordre résultant de cette table.

6. Procédé selon la revendication 5, caractérisé en ce que
- on stocke dans un champ (408) de la table les besoins des abonnés
- on met à jour les besoins des abonnés au fur et à mesure qu'ils sont exprimés et ou servis.

7. Procédé selon l'une des revendications 5 à 6, caractérisé en ce que
- on met à jour la table au fur et à mesure des entrées et sorties de communications des abonnés au réseau.

8. Procédé selon l'une des revendications 1 à 7, caractérisé en ce que
- on répartit des abonnés connectés dans plusieurs listes représentatives de degrés de priorité d'allocation de ressource,
- on organise ces listes selon une arborescence (300) binaire avec un noeud racine des noeuds intermédiaires et des noeuds finaux dits feuilles,
- on fixe la profondeur de l'arborescence, et on définit ainsi un nombre de noeuds et un nombre de chemins,
- le noeud racine est associé à une liste d'abonnés avec des plus grands degrés de priorité,
- au fur et à mesure qu'on descend dans l'arborescence, chaque noeud intermédiaire est associé à une liste, les listes associées contenant des abonnés avec des degrés de moins en moins prioritaire selon le niveau du noeud,
- les noeuds feuilles étant associés chacun à une liste, les listes associées aux noeuds feuilles contenant des abonnés avec des degrés les moins prioritaires,
- chaque chemin contient le noeud racine, un noeud intermédiaire de niveau inférieur, un noeud intermédiaire de niveau encore inférieur, et ainsi de suite, et un noeud feuille,
- on parcourt l'arborescence binaire depuis son noeud racine vers ses noeuds feuilles, à chaque noeud d'arborescence rencontré, on parcourt la liste associée pour allouer les ressources aux abonnés connectés de cette liste
- on parcourt tous les chemins les uns après les autres,
- chaque noeud d'un niveau donné dans l'arbre apparaît un nombre de fois sur l'ensemble des chemins qui est une puissance de deux correspondant à son niveau.

9. Procédé selon la revendication 8, caractérisé en ce que
- on découpe la durée de communication en cycles (601, 602),
- on découpe chaque cycle en trames, par exemple en huit trames de cinq millisecondes,
- on découpe chaque trame en fenêtres temporelles, par exemple 100 fenêtres temporelles par trame,
- on alloue la ressource sous la forme d'un nombre de fenêtres temporelles par cycle.

10. Procédé selon l'une des revendications 8 ou 9, caractérisé en ce qu'on alloue la ressource sous la forme de code, par exemple dans le cas d'un accés multiple à division par codage (CDMA)

11. Procédé selon l'une des revendications 9 ou 10, caractérisé en ce que
- on parcourt un chemin de l'arbre des listes des abonnés,
- on alloue des ressources correspondant aux besoins des abonnés présents dans les listes de ce chemin, sans que les ressources allouées ne puissent excéder une trame,
- s'il reste des fenêtres temporelles non allouées à la fin du parcours de ce chemin, elles sont allouées pour des autres abonnés ayant souscrit des contrats à des services ayant des priorités moindres,
- en cas de dépassement de la taille de la trame, on reporte les besoins d'allocation sur une trame d'un cycle suivant.

12. Procédé selon l'une des revendications 8 à 11, caractérisé en ce qu'on parcourt l'arbre des listes d'abonnés, ou un chemin de cet arbre, tant qu'un seuil de ressource allouable n'a pas été atteint.

13. Procédé selon l'une des revendications 10 à 12, caractérisé ne ce que
- on stocke l'ordre de parcours des listes d'abonnés dans un tableau contenu dans une mémoire (Tableau 1).
